# EUROPEAN PATENT APPLICATION

(11) **EP 1 168 273 A2**
(43) Date of publication of application: **02.01.2002**
(21) Application number: 01305567.8
(22) Date of filing: 27.06.2001
(51) Int. Cl.: G08C 19/00

(54) **Device controller and control arrangement**

(30) Priority: 27.06.2000 GB 0015559
(71) Applicant: Oxley Developments Company Limited, Ulverston Cumbria LA12 9QG (GB)
(72) Inventor: Latham, Christopher Brian, Dr., Newton in Cartmel, Cumbria LA11 6JR (GB); Bushell, Timothy George, Dr., Kirkby in Furness, Cumbria LA17 7TR (GB)
(74) Representative: W.P. Thompson & Co.

(57) **Abstract**

A controller 1 and a control arrangement are disclosed in which the controller 1 serves to intermittently interrupt an AC supply to a device 7 thereby to encode a control signal in the supply. A detector 5 receives the AC supply, decodes the control signal and controls the device 7 in dependence thereupon. Hence only the AC supply lines are needed to supply both power and the control signal. The device may in particular be an aircraft light.

## Description

The present invention is concerned with control of electrical and electronic devices.

A specific application of the present invention concerns aircraft lighting. The use of infra red sensitive viewing systems such as night vision goggles (NVGs) is making it necessary to retro-fit aircraft with exterior lights which are switchable between visible and infra red light emission. Infra red lighting, particularly on military aircraft, enables the aircraft to be visible to other aircraft flying using NVGs. The applicant's own granted U.S. Patent 6011493 describes a suitable light which can be substituted for a conventional light. It is necessary for the pilot to be able to switch, from the cockpit, between visible and infra red emission. Additionally it is desirable that the lighting should, under control from the cockpit, be able to flash in various on - off patterns to aid conspicuity in various flying conditions.

Typically existing aircraft wiring e.g. to wingtip lights, having been designed to drive only visible lighting, comprises only power supply and earth (or two electrical lines for an A.C. supply). Re-wiring to include further lines, to allow control and drive of two lights (visible and infra red) through separate lines would be complex and expensive so it is desirable to provide for the required control of both visible and infra red emitters using only the existing lines.

It is also desirable to provide for this control without need for separate electronic control signals which could give rise to difficulties as concerns electromagnetic compatibility.

While the present invention has been devised to address the above requirements concerning aircraft lighting, it has numerous other applications. Broadly stated, the aim of the present invention is to provide for control of an electrical or electronic device through the device's power supply lines.

In accordance with a first aspect of the present invention, there is a controller for controlling a device driven by an AC supply, the controller being adapted to intermittently interrupt the AC supply such as to encode a control signal therein.

In this way the lines used to carry the AC supply itself can be made also to carry the signal required to control a remote device.

In accordance with a second aspect of the present invention there is a control arrangement for controlling a device, comprising an AC supply, a controller adapted to intermittently interrupt the AC supply such as to encode a control signal therein, an AC supply line for conducting the encoded AC supply to the device and a detector for receiving the AC supply, decoding the control signal and controlling the device in dependence thereupon.

The AC supply may for example be provided by connecting the controller to AC mains.

The controller and the control arrangement according to the present invention make it unnecessary to provide signals or power separate from the AC supply itself, reducing or removing any electromagnetic compatibility problems (an important issue e.g. in the example of aircraft lighting) and making for a simple and convenient arrangement.

The controller and the control arrangement according to the present invention are particularly advantageous where, as in the aircraft lighting example, it is necessary to modify an existing circuit to provide for control of the device without adding new wiring to the device.

It is particularly preferred that the controller is adapted to begin and end interruptions of the AC supply when the supply potential is substantially zero. This is sometimes referred to as a "zero crossing" method. By carrying out switching when the potential is zero, or at least close to zero, it is ensured that no electromagnetic interference is produced.

Interruptions of the AC supply are preferably one AC cycle in duration. This is consistent with zero crossing.

It is particularly preferred that the controller is such as to interrupt the AC every X cycles, where X is adjustable and different values of X represent different control signals. The controller preferably receives control input (e.g. from switches controlled by a user) and adjusts X to correspondingly control the device.

According to an especially preferred embodiment of the present invention the control arrangement is for controlling exterior aircraft lighting. In such an embodiment the controller may be mounted in or adjacent to the cockpit and connected by the AC supply line to an exterior aircraft light provided with the detector. Preferably the aircraft light has a visible light emitter and an infra red emitter both controllable by the controller.

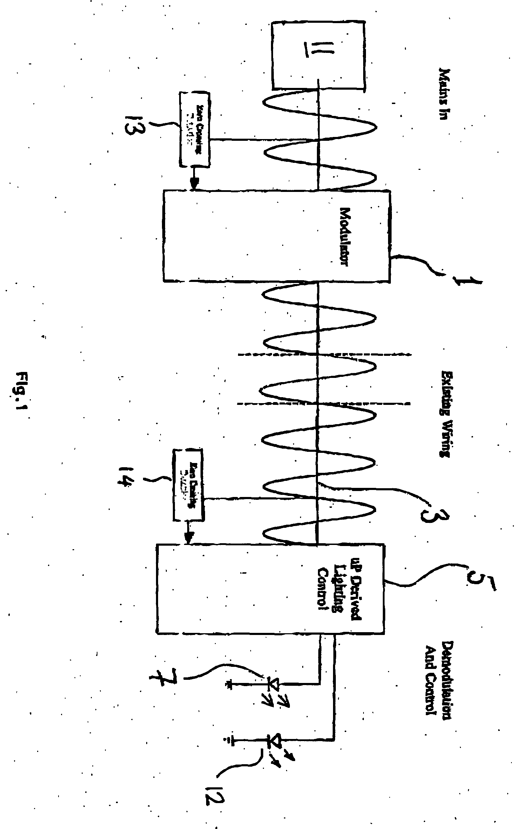

A specific example of the present invention will now be described, by way of example only, with reference to accompanying Fig. 1 which is a simplified block diagram of a light control system according to the present invention.

The illustrated light control system is suitable for control of aircraft lights. It can be used to facilitate retro-fitting of switchable visible/infra red lights to existing aircraft using existing aircraft wiring originally intended for visible lights only.

As the drawing indicates, the control system comprises a controller in the form of a modulator 1 which modulates an AC supply 10 taken from the aircraft mains 11. The modulator 1 is under the control of the pilot (e.g. through cockpit mounted light switches) and modulates the AC supply such as to encode a control signal therein.

The modulator 1 is mounted in the vicinity of the cockpit. The modulated AC signal is conducted through existing aircraft wiring 3 to a light at a remote location on the aircraft, e.g. the wingtip. The wiring 3 need only include the existing lines intended to supply AC power to the light.

The modulated AC signal is led first to a detector 5 which is mounted in, or in the vicinity of, the light itself. The detector 5 comprises a microprocessor which decodes the control signal carried by the AC and in response thereto (and so under control from the modulator 1) selectively directs the AC to one of two or more light sources carried by the light (examples of which are shown as LEDs 7 and 12) to provide the required light - visible, infra red, flashing etc.

The light sources themselves can use solid state visible and infra red LEDs. Additionally or alternatively conventional incandescent bulbs may be used.

In the illustrated embodiment the modulator 1 encodes the control signal by selectively removing one cycle of the AC supply every X cycles, where the ratio X is adjusted according to the control input from the pilot. The ratio X is monitored by the detector 5 which switches the light to different modes in response to different X values.

In the drawing, a removed AC cycle is shown in dotted lines. It can be seen that the removed cycle begins and ends at instants of zero supply potential ("zero crossing") so that there can be no possibility of electromagnetic interference being generated by the switching. Also schematically indicated are zero crossing detectors 13, 14 associated respectively with the modulator 1 and the detector 5, by means of which zero crossing encoding and detection are achieved.

The arrangement described above is particularly suited to control of LED lighting on aircraft where electromagnetic interference issues can be safety critical and where the detector microprocessor can also conveniently include any necessary power regulation and temperature compensation.

However, the present invention could have many "non invasive" applications not only in 400Hz aircraft systems but also in mains systems (e.g. at 50Hz) and wherever relatively slow (msec) control is adequate.

## Claims

1. A controller (1) for controlling a device (7, 12) driven by an AC supply, the controller being adapted to intermittently interrupt the AC supply such to encode a control signal therein.

2. A controller as claimed in claim 1 connectable to an AC mains (11) to thereby receive the AC supply.

3. A controller as claimed in claim 1 or claim 2 which is adapted to begin and end interruptions of the AC supply when the supply potential is substantially zero.

4. A controller as claimed in any of claims 1 to 3, wherein the controller is such as to cause interruptions of one AC cycle in duration.

5. A controller as claimed in any preceding claim, wherein the controller is such as to interrupt the AC every X cycles, where X is adjustable and different values of X represent different control signals.

6. A controller as claimed in claim 5 wherein the controller is adapted to receive control input and to adjust X to correspondingly control the device.

7. A control arrangement for controlling a device (7), comprising an AC supply (11), a controller (1) as claimed in any preceding claim, an AC supply line (3) for conducting the encoded AC supply from the controller to the device and a detector (5) for receiving the AC supply, decoding the control signal and controlling the device in dependence thereupon.

8. A control arrangement as claimed in claim 7 wherein the device is an external aircraft light (7,12).

9. A control arrangement as claimed in claim 8, wherein the aircraft light has a visible light emitter and an infra red emitter both controllable by the controller.
